# EUROPEAN PATENT SPECIFICATION

(11) **EP 2 716 937 B1**
(45) Date of publication and mention of the grant of the patent: **18.05.2016**
(21) Application number: 13186823.4
(22) Date of filing: 01.10.2013
(51) Int. Cl.: F16H 59/02, F16H 61/02

(54) **STRADDLE-TYPE VEHICLE COMPRISING A TRANSMISSION WITH AUTO AND MANUAL MODE**
GRÄTSCHSITZ-FAHRZEUG MIT EINEM IM AUTO- ODER MANUAL-MODUS BETREIBAREN GETRIEBE
VÉHICULE DE TYPE À ENFOURCHER COMPRENANT UNE TRANSMISSION AYANT UN MODE AUTOMATIQUE ET UN MODE MANUEL

(30) Priority: 03.10.2012 JP 2012221004
(43) Date of publication of application: 09.04.2014
(73) Proprietor: Yamaha Hatsudoki Kabushiki Kaisha, Iwata-shi, Shizuoka 438-8501 (JP)
(72) Inventor: Zenno, Toru, Iwata-shi, Shizuoka 438-8501 (JP)
(74) Representative: Grünecker Patent- und Rechtsanwälte PartG mbB

(56) References cited:
- US-A1- 2007 204 710
- US-A1- 2008 215 217
- US-B1- 6 363 805

## Description

### 1. Field of the Invention

This invention relates to a straddle-type vehicle that controls a clutch and a transmission using an actuator, as known from US 2008/0215217 disclosing all the features of the preamble of claim 1.

### 2. Description of the Related Art

Conventionally, straddle-type vehicles that control clutches and transmissions using actuators have been available. JP 2009-156375 A discloses a motorcycle as an example of the straddle-type vehicle. The motorcycle in JP 2009-156375 A includes a transmission having a plurality of shift positions and, as control mode thereof, has an auto mode and a manual mode. In the auto mode, the shift position is automatically changed according to a driving state which is represented by a vehicle speed, a throttle opening, etc. In the manual mode, the shift position is changed in response to operation of a shift switch by a rider. Switching between the auto mode and the manual mode is executed according to operation of a mode select switch.

### SUMMARY OF THE INVENTION

During traveling in the auto mode, temporal switching to the manual mode is desired in some cases. That is, traveling at a shift position designated by the rider is sometimes desired in the auto mode. For example, the temporal mode switching is sometimes desired in cases where the motorcycle passes the vehicle in front thereof, the motorcycle travels on a slope, etc. Further, during traveling in the auto mode, complete switching to the manual mode is desired in some cases. That is, after switching from the auto mode to the manual mode, the manual mode may be desired to maintain until the mode select switch is operated by the rider. In the motorcycle disclosed in JP 2009-156375 A, operation of the mode select switch is necessary in any cases for switching the modes. The mode select switch is generally located in a location out of the reach of a finger of the hand holding the grip. Accordingly, operation of the mode select switch for switching the mode from the auto mode to the manual mode is not easy for the rider.

An object of one embodiment of the invention is to provide a straddle-type vehicle that can selectively execute temporal switching to a manual mode and complete switching to the manual mode by simple operation. Such an object is achieved by a straddle-type vehicle in accordance with claim 1

A straddle-type vehicle according to an embodiment includes a transmission; an actuator for actuating the transmission to change shift positions; a shift change request input part operated by a rider; and a controller that controls the shift positions of the transmission by activating the actuator. The controller has an auto mode of controlling the transmission to be set at a shift position in response to a driving state of the vehicle and a manual mode of controlling the transmission in response to a shift change request received from the shift change request input part. When a first operation for the shift change request input part is performed in the auto mode, the controller switches from the auto mode to the manual mode and changes shift position in response to the first operation, and then, maintains the manual mode until a predetermined operation is performed thereon by the rider. When a second operation for the shift change request input part is performed in the auto mode, the controller switches from the auto mode to the manual mode and changes shift position in response to the second operation, and then, when a predetermined condition is fulfilled, returns to the auto mode without an operation by the rider.

According to the straddle-type vehicle, temporal switching to the manual mode and complete switching to the manual mode can be selectively executed by simple operations.

In the straddle-type vehicle, the shift change request input part may include a first shift change operated member and a second shift change operated member. Further, the first operation may be for the first shift change operated member, and the second operation may be for the second shift change operated member. According to the embodiment, the rider may easily execute the operation necessary for the temporal switching to the manual mode and the operation necessary for the complete switching to the manual mode.

The shift change request input part may include at least two among a shift switch for operation by a finger; a shift pedal for operation by a foot; and an accelerator grip. The accelerator grip is rotatable from a neutral position in a positive direction and from the neutral position in a negative direction and outputs, as the shift change request, a rotational operation from the neutral position in the negative direction to the controller. The first shift change operated member may be one of the at least two and the second shift change operated member may be another of the at least two. According to the embodiment, mode selection can be performed using the shift switch, the shift pedal, and/or the accelerator grip, and thus, the number of necessary new parts can be reduced.

Each of the first shift change operated member and the second shift change operated member may be a member for operation by hand. According to the embodiment, the temporal switching to the manual mode and the complete switching to the manual mode can be selected through the operation by hand, and the operability can be improved.

The first shift change operated member may be a member for receiving both a shift-up request and a shift-down request, and the second shift change operated member may be a member for receiving only the shift-down request of the shift-up request and the shift-down request. According to the embodiment, the first shift change operated member, which is used for both the shift-up and the shift-down, may be used for the complete switching to the manual mode. Accordingly, after the complete switching to the manual mode, the shift change operated member used by the rider is not required to be changed. As a result, the operability of the vehicle after the complete switching can be improved. Whereas, in general, the temporal switching to the manual mode is required when a shift down is required. Accordingly, though the second shift change operated member which is used for the temporal switching receives only the shift-down request, the operability can not be detracted.

### BRIEF DESCRIPTION OF THE DRAWINGS

Figs. 1A and 1B show an appearance of a motorcycle according to an embodiment of the invention.
Fig. 2 is a block diagram showing a configuration of the motorcycle.
Figs. 3A and 3B are diagrams for explanation of an accelerator grip.
Fig. 4 is a block diagram showing functions of a controller.
Fig. 5 is a flowchart showing a flow of an example of processing executed by the controller.
Fig. 6 is a flowchart showing a flow of an example of processing executed by the controller.

### DETAILED DESCRIPTION OF THE INVENTION

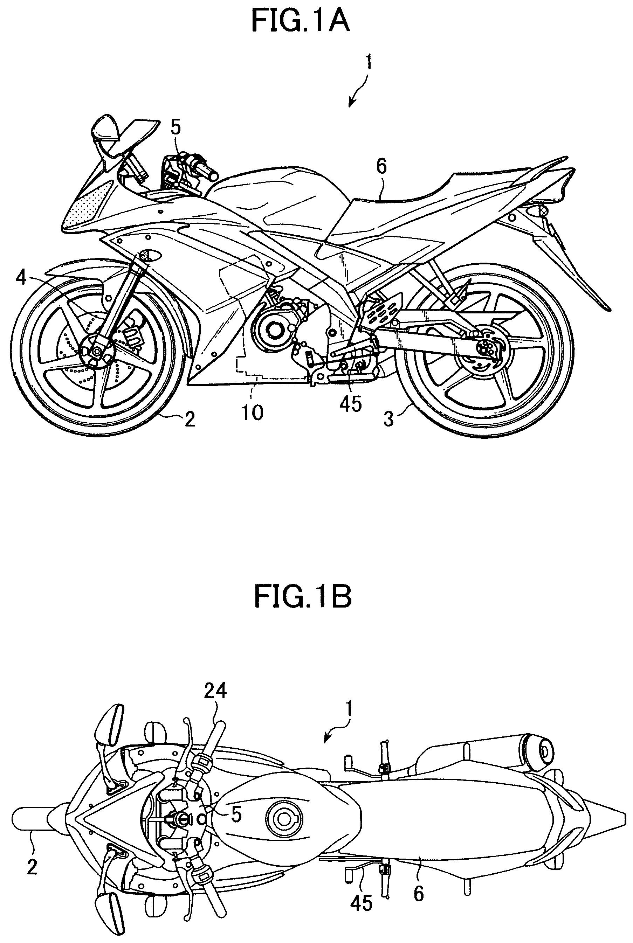

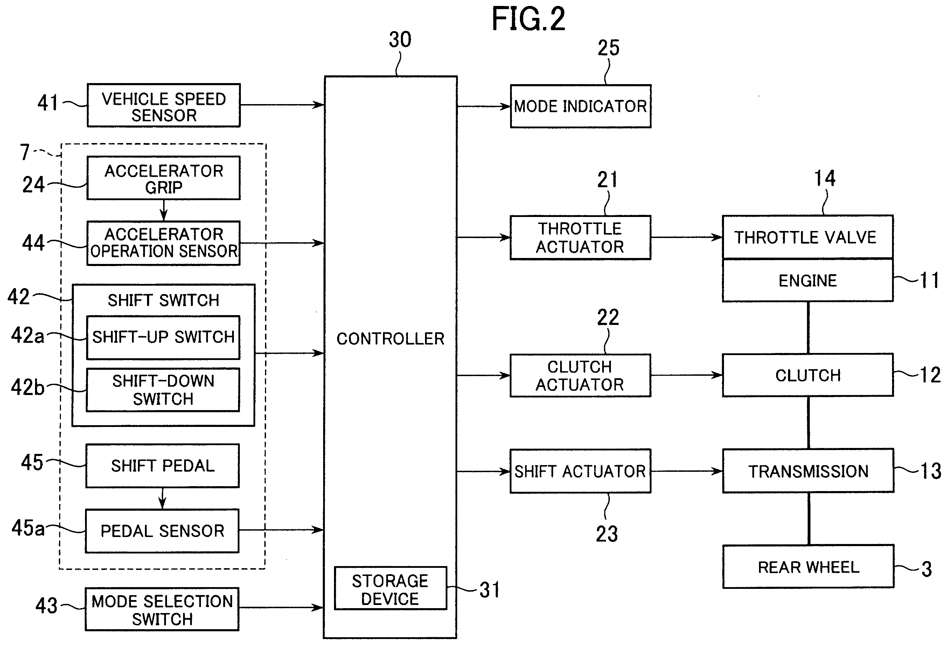

As below, an embodiment according to the invention will be explained with reference to the drawings. Figs. 1A and 1B show an appearance of a motorcycle 1 as an example of straddle-type vehicle according to the embodiment. Fig. 1A is a side view and Fig. 1 B is a plan view. Fig. 2 is a block diagram showing a configuration of the motorcycle 1. The straddle-type vehicle according to the invention may be a scooter-type motorcycle. Further, the straddle-type vehicle may be a rough terrain vehicle or snowmobile.

As shown in Figs. 1 A and 1 B, the motorcycle 1 has a front wheel 2. The front wheel 2 is supported at the lower end of a front fork 4. The front fork 4 is connected to a handle 5 through a steering shaft (not shown). The handle 5, the front fork 4, and the front wheel 2 are rotatable to right and left around the steering shaft. A seat 6 is provided at the rear of the handle 5.

The motorcycle 1 includes an engine unit 10 and a rear wheel 3 as a driving wheel. As shown in Fig. 2, the engine unit 10 includes an engine 11, a clutch 12, and a transmission 13. The engine 11 includes a throttle valve 14 for controlling an amount of air to be supplied to the engine 11. In this example, the opening of the throttle valve 14 is controlled by an actuator 21.

The clutch 12 and the transmission 13 are provided in a power transmission path from the engine 11 to the rear wheel 3. The clutch 12 may be set to a state of transmitting power of the engine 11 to the transmission 13 (i.e., an engagement state in which a drive member and a driven member of the clutch 12 are engaged) or a state of blocking power transmission to the transmission 13 (a non-engagement state in which the drive member and the driven member are not engaged). The motorcycle 1 includes a clutch actuator 22 that operates the clutch 12 so that the power transmission state by the clutch 12 may change.

The transmission 13 in the example explained here is a multi-level variable transmission having a plurality of shift positions (for example, 1st speed, 2nd speed, etc.). The transmission ratios of the shift positions have discrete values. The transmission 13 includes a plurality of transmission gears, and selectively engages them to form the respective shift positions. The transmission 13 is not limited to that, but may be a continuously variable transmission, for example. Even when the transmission 13 employs the continuously variable transmission, shift positions may be set to the continuously variable transmission. That is, the transmission ratios having discrete values may be defined set as shift positions in advance. In this case, a controller 30 to be described later may change the transmission ratio of the continuously variable transmission among the shift positions. That is, the controller 30 may selectively set the transmission ratio of the continuously variable transmission to the transmission ratios having discrete values. The motorcycle 1 includes a shift actuator 23 for operating the transmission 13 so that the shift position of the transmission 13 is changed.

In the example in Fig. 2, the motorcycle 1 includes the clutch actuator 22 for operating the clutch 12 and the shift actuator 23 for operating the transmission 13. However, the clutch 12 and the transmission 13 may be operated by a common actuator. That is, one actuator may operate the transmission gear of the transmission 13 and the clutch 12. Further, two clutches may be provided in the motorcycle 1. That is, the transmission 13 may have two input shafts, and clutches may be respectively provided in a path from the engine 11 to one input shaft and a path from the engine 11 to the other input shaft. Furthermore, in the case where the transmission 13 is a continuously variable transmission, the motorcycle 1 may include an automatic clutch (for example, a centrifugal clutch). In this case, the motorcycle 1 may not necessarily include the clutch actuator 22.

As shown in Fig. 2, the motorcycle 1 includes the controller 30 that controls the engine 11, the clutch 12, and the transmission 13. The controller 30 includes a microprocessor that executes processing relating to the control. Further, the controller 30 includes a storage device 31 including a memory such as a ROM (Read Only Memory) or RAM (Random Access Memory). The storage device 31 has programs stored therein for processing executed by the microprocessor and has maps stored therein which are used during processing.

As shown in Fig. 2, the motorcycle 1 includes a vehicle speed sensor 41 for sensing a vehicle speed. The vehicle speed sensor 41 is provided on an axle of the front wheel 2, an output shaft of the transmission 13, or an axle of the rear wheel 3. The controller 30 calculates the vehicle speed based on an output signal of the vehicle speed sensor 41.

The motorcycle 1 includes a shift change request input part 7 operated by a rider for changing the shift positions. The shift change request input part 7 includes a plurality of shift change operated members. One of the shift change operated members is a shift switch 42 provided on the handle 5 to be operated by the rider with a finger. As shown in Fig. 2, the shift switch 42 in this example includes a shift-up switch 42a for receiving a shift-up request from the rider and a shift-down switch 42b for receiving a shift-down request from the rider. The shift-up request is a shift change request to change a shift position (transmission ratio) to a higher speed (for example, toward 5th speed). The shift-down request is a shift change request to change a shift position (transmission ratio) to a lower speed (toward 1st speed). The shift switch 42 respectively inputs signals in response to the shift-up request and the shift-down request to the controller 30. The controller 30 changes the shift position by one level in response to one shift change request.

Another shift change operated member included in the shift change request input part 7 is a shift pedal 45 (see Figs. 1A and 1B) provided in the lower part of the vehicle body to be operated by the rider with a foot. The shift pedal 45 has a shift-up operation for receiving the shift-up request from the rider and a shift-down operation for receiving the shift-down request from the rider as its operation form, for example. The shift-up operation is an operation of pulling up the shift pedal 45 upward, for example, and the shift-down operation is an operation of pressing down the shift pedal 45 downward, for example. A pedal sensor 45a is provided on the shift pedal 45. The pedal sensor 45a inputs a signal in response to the operation of the shift pedal 45 to the controller 30.

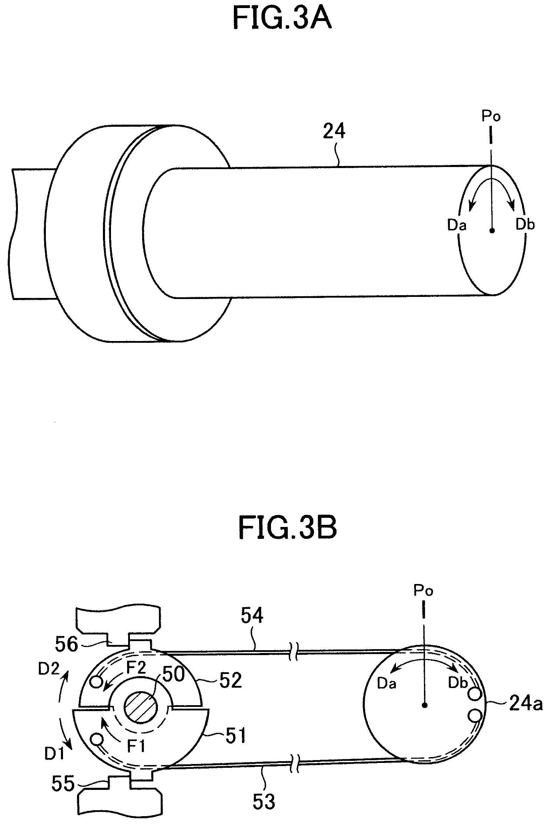

The motorcycle 1 includes an accelerator grip 24 provided on the handle 5 to be operated by the rider as another shift change operated member included in the shift change request input part 7. Figs. 3A and 3B are diagrams for explanation of the accelerator grip 24. As shown in Fig. 3A, the accelerator grip 24 can turn from a neutral position in a positive direction and a negative direction (In Figs. 3A and 3B, the neutral position, the positive direction, and the negative direction are shown by signs Po, Da, Db, respectively). The accelerator grip 24 is urged toward the neutral position Po. That is, the neutral position Po is an initial position to which the accelerator grip 24 returns when a force turning the accelerator grip 24 in the positive direction Da and a force turning the accelerator grip 24 in the negative direction Db are released.

The turn of the accelerator grip 24 is sensed by an accelerator operation sensor 44, which will be described later. The controller 30 receives, as a shift change request from the rider, the turn of the accelerator grip 24 from the neutral position in the negative direction sensed through the accelerator operation sensor 44. In the example explained here, the turn of the accelerator grip 24 in the negative direction is received as the shift-down request from the rider. Further, the controller 30 controls the engine 11 according to an amount of turn of the accelerator grip 24 from the neutral position in the positive direction (hereinafter, the amount will be referred to as "positive amount of accelerator turn") sensed through the accelerator operation sensor 44. Specifically, the controller 30 controls the opening of the throttle valve 14 provided in the engine 11 (hereinafter, referred to as "throttle opening") according to the positive amount of accelerator turn. The controller 30 calculates a target throttle opening corresponding to the positive amount of accelerator turn, and activates the throttle actuator 21 so that the actual throttle opening coincides with the target throttle opening. The controller 30 controls the throttle valve 14 so that the throttle opening becomes larger as the amount of accelerator turn increases.

Fig. 3B is a schematic view showing an example of a structure of realizing the above described movements of the accelerator grip 24. In this drawing, the accelerator grip 24 is located in the neutral position Po. In the example of the drawing, two pulleys 51, 52 arranged in an axis direction are provided on a support shaft 50. The pulleys 51, 52 can turn relative to each other. The first pulley 51 is connected to a grip pulley 24a of the accelerator grip 24 through a first wire 53, and the second pulley 52 is connected to the grip pulley 24a through a second wire 54. When the accelerator grip 24 turns in the positive direction Da, the first pulley 51 is pulled by the first wire 53 to turn in a first direction D1. When the accelerator grip 24 turns in the negative direction Db, the second pulley 52 turns in a second direction D2. The first direction D1 and the second direction D2 are opposite to each other. The first pulley 51 is urged in the second direction D2 by an elastic force F1 of a spring (not shown, for example, a coil spring). Further, the first pulley 51 is in contact with a stopper 55 when the accelerator grip 24 is in the neutral position Po. When the accelerator grip 24 is in the neutral position Po, the stopper 55 restricts turn of the first pulley 51 in the second direction D2. The second pulley 52 is urged in the first direction D1 by an elastic force F2 of a spring (not shown, for example, a coil spring). The second pulley 52 is in contact with a stopper 56 when the accelerator grip 24 is in the neutral position Po. When the accelerator grip 24 is in the neutral position Po, the stopper 56 restricts turn of the second pulley 52 in the first direction D1. According to the structure, when the accelerator grip 24 is turned in the positive direction Da, the first pulley 51 turns in the first direction D1 against the elastic force F1 of the spring away from the stopper 55. When the force turning the accelerator grip 24 in the positive direction Da is eliminated, the first pulley 51 turns in the second direction D2 into contact with the stopper 55 by the elastic force F1, and the accelerator grip 24 returns to the neutral position Po. When the accelerator grip 24 is turned in the negative direction Db, the second pulley 52 turns in the second direction against the elastic force F2 of the spring away from the stopper 56. When the force turning the accelerator grip 24 in the negative direction Db is eliminated, the second pulley 52 turns in the first direction D1 into contact with the stopper 56 by the elastic force F2, and the accelerator grip 24 returns to the neutral position Po.

The structure that enables the accelerator grip 24 to turn in the two directions is not limited to that shown in Fig. 3B. For example, the pulleys 51, 52 are not necessarily provided in the structure. Further, a first spring that urges the accelerator grip 24 in the position in the positive direction to the neutral position and a second spring that urges the accelerator grip 24 in the position in the negative direction to the neutral position may be provided in the accelerator grip 24.

As shown in Fig. 2, the motorcycle 1 includes the accelerator operation sensor 44 for sensing the operation (turn) of the accelerator grip 24. The accelerator operation sensor 44 outputs a signal in response to the amount of turn of the accelerator grip 24 in the positive direction to the controller 30. Further, the accelerator operation sensor 44 outputs a signal in response to the turn of the accelerator grip 24 in the negative direction to the controller 30. For example, the accelerator operation sensor 44 outputs a signal in response to the amount of turn in the negative direction. In this case, when the amount of turn in the negative direction reaches a preset threshold value (for example, the maximum turn position in the negative direction), the controller 30 may determine that the accelerator grip 24 has turned in the negative direction. Alternatively, the accelerator operation sensor 44 may output a signal in response to, not the amount of turn, but whether or not there is a turn of the accelerator grip 24 in the negative direction, i.e., an on/off signal. In this case, the accelerator operation sensor 44 may include a sensor for sensing the amount of turn in the positive direction and a sensor (switch) for sensing whether or not there is a turn in the negative direction.

The accelerator operation sensor 44 is provided on the accelerator grip 24, for example. Further, the accelerator operation sensor 44 may be provided toward the pulleys 51, 52. In this case, the accelerator operation sensor 44 may include two sensors, and one sensor may output a signal in response to an amount of turn of the first pulley 51 and the other sensor may output a signal in response to an amount of turn of the second pulley 52.

The controller 30 in this example has an auto mode and a manual mode as control modes of the transmission 13. In the auto mode, the controller 30 controls the transmission 13 so that the transmission ratio of the transmission 13 coincides with a transmission ratio in response to the driving state of the vehicle. In the manual mode, the controller 30 controls the transmission 13 according to a shift change request received from the above described shift change operated member. The motorcycle 1 includes a mode selection switch 43 for operation of the rider. The mode selection switch 43 is operated by the rider to thereby output, to the controller 30, a switch request with respect to the control mode. The specific control of the controller 30 in these two modes will be described later in detail.

As shown in Fig. 2, the motorcycle 1 includes a mode indicator 25. The mode indicator 25 is for informing the rider of the control mode being selected (the manual mode or auto mode). The mode indicator 25 is driven (lighted) in a pattern in response to the control mode being selected. As will be described later, the lighting pattern of the mode indicator 25 is controlled by the controller 30.

The controller 30 switches between the auto mode and the manual mode according to the switch request of the control mode received through the mode selection switch 43. Further, the motorcycle 1 includes the shift change operated members for making requests of changing shift position to the controller 30 by the rider. As described above, the shift change operated members include the shift switch 42, the shift pedal 45, and the accelerator grip 24 (as described above, the turn of the accelerator grip 24 from the neutral position in the negative direction is received as the shift-down request). The controller 30 does not only switch the control mode due to the operation of the mode selection switch 43 but also switch the control mode due to the operation of the shift change operated members during the auto mode. That is, the shift switch 42, the shift pedal 45, and the accelerator grip 24 are not only used for changing shift position but also used for switching of the control mode.

The controller 30 has two manners as switching manners of the control modes due to the operation of the shift change operated members. The first mode-switching manner is executed when a predetermined operation is performed on the shift change request input part 7 during the auto mode (the predetermined operation corresponds to a first operation in claims. Hereinafter, the operation is referred to as "complete switching operation"). As described above, the shift change request input part 7 includes the shift change operated members. The complete switching operation is an operation for the predetermined shift change operated member of the plural shift change operated members (the predetermined shift change operated member corresponds to a first shift change operated member in claims. Hereinafter, the shift change operated member is referred to as "complete switching member"). When the complete switching member is operated during the auto mode, the controller 30 switches from the auto mode to the manual mode, and changes shift position in response to the operation of the complete switching member. For example, when the complete switching member is the shift switch 42, the controller 30 controls the transmission 13 to be at the shift position in response to the shift change request received through the shift switch 42. Then, the controller 30 maintains the manual mode until a predetermined operation is performed by the rider. The predetermined operation is an operation of the mode selection switch 43, for example. That is, when the complete switching member is operated during the auto mode, the controller 30 completely switches the control mode from the auto mode to the manual mode.

The second mode-switching manner is executed when an operation different from the complete switching operation is performed on the shift change request input part 7 during the auto mode (the operation different from the complete switching operation corresponds to a second operation in claims. Hereinafter, the operation is referred to as "temporal switching operation"). In the example explained here, the temporal switching operation is an operation for the shift change operated member different from the complete switching member (the shift change operated member different from the complete switching member corresponds to a second shift change operated member in claims. Hereinafter, the shift change operated member is referred to as "temporal switching member"). When the temporal switching member is operated during the auto mode, the controller 30 switches from the auto mode to the manual mode, and changes shift position in response to the operation of the temporal switching member. For example, when the temporal switching member is the shift pedal 45, the controller 30 controls the transmission 13 to be at the shift position in response to the shift change request received through the shift pedal 45. Then, when a predetermined condition is fulfilled, the controller 30 returns the control mode from the manual mode to the auto mode without the operation by the rider (the predetermined condition is referred to as "mode return condition"). That is, when the temporal switching member is operated during the auto mode, the controller 30 temporarily switches the control mode from the auto mode to the manual mode.

The mode return condition may be set as various conditions. In one example, the controller 30 returns the control mode from the manual mode to the auto mode under a condition that a preset period has been elapsed from the time when the temporal switching member is operated. In another example, the mode return condition is a condition with respect to the driving state. For example, the controller 30 returns the control mode from the manual mode to the auto mode under a condition that the shift position in response to the shift change request received through the temporal switching member coincides with the shift position determined in response to the driving state of the vehicle (the shift position assuming that the auto mode is executed).

According to the controller 30, the rider selects the member to operate from the complete switching member and the temporal switching member, and thereby, may select temporal switching to the manual mode (that is, the switching manner in which return to the auto mode is automatically performed) and complete switching to the manual mode (the shift form in which return to the auto mode is manually performed). That is, the rider may change the shift position and selects the temporal switching to the manual mode or the complete switching to the manual mode by selecting one of the complete switching member and the temporal switching member to operate the member, and thereby, the operation may be simplified. Further, in the embodiment, the shift change operated member for the temporal switching operation (that is, temporal switching member) and the shift change operated member for the complete switching operation (that is, complete switching member) are different from each other. Accordingly, compared to the embodiment in which the temporal switching operation and the complete switching operation different from each other are specified with respect to the same shift change operated member, both the temporal switching operation and the complete switching operation may be made easier.

The shift change request input part 7 of the embodiment includes the three shift change operated members as described above. That is, the shift change request input part 7 includes the shift switch 42, the shift pedal 45, and the accelerator grip 24 as the shift change operated members. The complete switching member employs one or two of the three shift change operated members, and the temporal switching member employs the other shift change operated member(s). There are various embodiments depending on use of the respective shift change operated members as the complete switching member(s) and the temporal switching member(s).

In one example, the shift switch 42 and the shift pedal 45 are assigned as the complete switching members and the accelerator grip 24 is assigned as the temporal switching member. The shift down is necessary at deceleration of the vehicle in many cases. Accordingly, the execution of shift down by the operation of turning the accelerator grip 24 further in the negative direction from the neutral position coincides with the intention of the rider and thus improves the operability of the vehicle. Further, the rider also uses the accelerator grip 24 for the vehicle speed adjustment, i.e., the control of the engine 11. Accordingly, the rider turns the accelerator grip 24 in the negative direction, and then, returns the accelerator grip 24 to the neutral position or the positive turn position in many cases. Therefore, according to the embodiment in which the accelerator grip 24 is assigned as the temporal switching member, the rider may feel that the operation of returning the accelerator grip 24 to the neutral position or the positive turn position means the return to the auto mode. As a result, the operability of the vehicle felt by the rider may be improved. Further, the shift switch 42 and the shift pedal 45 are the shift change operated member that can receive both the shift-up request and the shift-down request of the rider as described above. Accordingly, the rider may perform the shift up and the shift down without changing the shift change operated member being used after the complete switching to the manual mode. On the other hand, the accelerator grip 24 is the shift change operated member that can receive only the shift-down request. By using the accelerator grip 24 as the temporal switching member, even when the accelerator grip 24 is the member that can receive only the shift-down request, the operability of the vehicle may be secured.

In another example, the shift switch 42 is assigned as the complete switching member, and the shift pedal 45 and the accelerator grip 24 are assigned as the temporal switching members. In the vehicle having the shift switch and the shift pedal, the rider may use the shift switch for changing shift position more often than the shift pedal. Therefore, by assigning the shift switch 42 as the complete switching member, the operated member at the higher use frequency is operated in the manual mode and the control mode completely switches to the manual mode, and thus the operational feeling may be improved.

In the above described two examples, both the shift switch 42 as the complete switching member and the accelerator grip 24 as the temporal switching member are the shift change operated member that can be operated by hand. Accordingly, both the selections of the complete switching to the manual mode and the temporal switching to the manual mode may be performed by hand, and thereby the operability may be improved. Note that, in the case where the shift switch 42 is used as the complete switching member and the shift pedal 45 is used as the temporal switching member, the accelerator grip 24 may not necessarily be used as the shift change operated member or the member for switching the control mode.

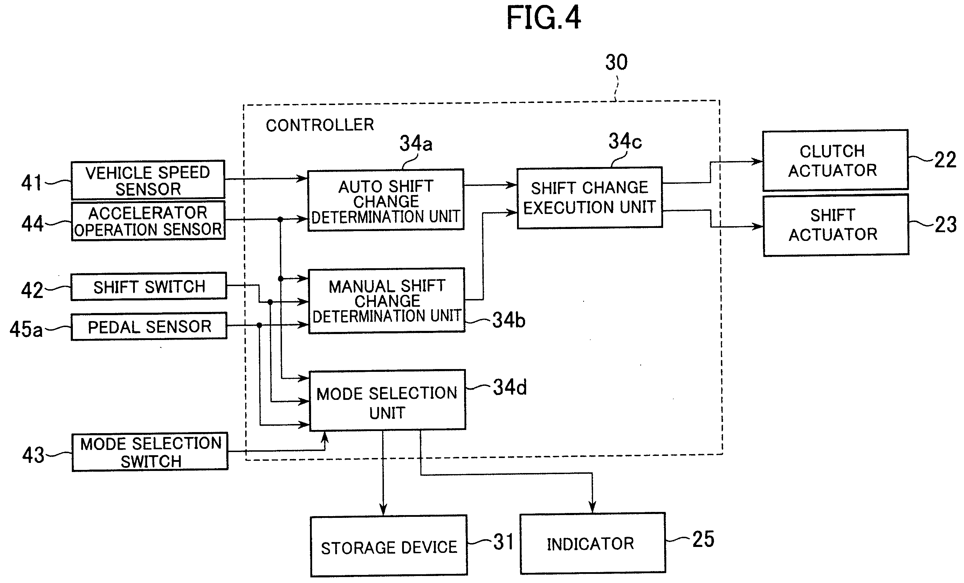

Fig. 4 is a block diagram showing functions of the controller 30. As shown in the same drawing, the controller 30 includes, as the functions, an auto shift change determination unit 34a, a manual shift change determination unit 34b, a shift change execution unit 34c, and a mode selection unit 34d.

The mode selection unit 34d selects the control mode to be executed by the controller 30 according to the operation of the shift switch 42, the shift pedal 45, and the accelerator grip 24 assigned as the complete switching member(s) or the temporal switching member(S), and the mode selection switch 43. In other words, the mode selection unit 34d switches the control mode according to the signals (mode switch requests) input from these operated members.

For example, the storage device 31 holds information showing the control mode being selected. Hereinafter, this information is referred to "mode flag". Further, a mode flag indicating the auto mode and a mode flag indicating the manual mode are referred to as "auto mode flag" and "manual mode flag", respectively. In this case, the mode selection unit 34d switches the mode flag between the auto mode flag and the manual mode flag in response to the mode switch request. When the storage device 31 holds the auto mode flag, processing of the auto shift change determination unit 34a is executed, and, when the storage device 31 holds the manual mode flag, processing of the manual shift change determination unit 34b is executed. The mode selection unit 34d performs the following processing, for example, in order to realize the above described first mode switching manner and second mode switching manner.

When receiving the mode switch request from the complete switching member under the condition that the storage device 31 holds the auto mode flag, the mode selection unit 34d changes the flag held by the storage device 31 to the manual mode flag. Then, when receiving the mode switch request from the mode selection switch 43 due to the operation of the rider, the mode selection unit 34d changes the manual mode flag held by the storage device 31 to the auto mode flag. Through the above processing, the first mode switching manner is realized.

When receiving the mode switch request from the temporal switching member under the condition that the storage device 31 holds the auto mode flag, the mode selection unit 34d changes the flag held by the storage device 31 to the manual mode flag. Then, the mode selection unit 34d determines whether or not the above described mode return condition is fulfilled. If the mode return condition is fulfilled, the mode selection unit 34d changes the flag held by the storage device 31 to the auto mode flag without the need for the operation by the rider. Through the processing, the second mode switching manner is realized.

If the complete switching member is operated after the temporal switching member is operated and before the mode return condition is fulfilled, the mode selection unit 34d may execute the following processing. For example, the mode selection unit 34d ends the determination regardless of whether or not the mode return condition is fulfilled, and completely changes the control mode to the manual mode. That is, the mode selection unit 34d maintains the manual mode until a predetermined operation, for example, the operation of the mode selection switch 43 is performed by the rider. In this case, the manual shift change determination unit 34b to be described later may generate a shift change command in response to the first operation of the temporal switching member, and additionally, make a shift change command in response to the subsequent operation of the complete switching member. In this case, the shift change execution unit 34c continuously changes shift position two times. Instead the manual shift change determination unit 34b may generate the shift change command in response to the first operation of the temporal switching member, but may not necessarily generate the shift change command in response to the subsequent operation of the complete switching member. That is, the shift change execution unit 34c may change shift position only one time according to the shift change command in response to the first operation of the temporal switching member.

Further, if the complete switching member is operated after the temporal switching member is operated and before the mode return condition is fulfilled, the mode selection unit 34d may continue the determination as to whether or not the mode return condition is fulfilled. Then, if the mode return condition is fulfilled, the mode selection unit 34d may return the control mode to the auto mode. In this case, the manual shift change determination unit 34b may generate a shift change command in response to the first operation of the temporal switching member, and additionally, generate a shift change command in response to the subsequent operation of the complete switching member. In this case, the shift change execution unit 34c continuously changes shift position two times. Instead the manual shift change determination unit 34b may generate the shift change command in response to the first operation of the temporal switching member, but may not necessarily generate the shift change command in response to the subsequent operation of the complete switching member.

The mode selection unit 34d drives the mode indicator 25 in the pattern in response to the control mode being selected. That is, when the storage device 31 holds the auto mode flag, the mode selection unit 34d lights the mode indicator 25 in the pattern in response to the auto mode flag (hereinafter, "first pattern"). When the storage device 31 holds the manual mode flag, the mode selection unit 34d lights the mode indicator 25 in the pattern in response to the manual mode flag (hereinafter, "second pattern"). Further, in the second mode switching manner, the mode selection unit 34d lights the mode indicator 25 in the third pattern until the mode return condition is fulfilled. Thereby, the rider may expect that the control mode automatically returns to the auto mode without his or her operation.

Note that, when receiving the mode switch request from the mode selection switch 43, the mode selection unit 34d switches the mode flag being held by the storage device 31 into either of the auto mode or the manual mode.

The auto shift change determination unit 34a determines whether or not the time to change shift position has come according to the driving state sensed by the sensor. The driving state is represented by the vehicle speed and the amount of turn of the accelerator grip 24 in the positive direction (positive amount of accelerator turn). That is, the auto shift change determination unit 34a determines whether or not the current driving point of the vehicle (vehicle speed, amount of accelerator turn) has reached a shift change point. The auto shift change determination unit 34a generates a shift change command when determining that the current driving point has reached an driving point at which shift position is to be changed (hereinafter, "shift change point"). The shift change command is a command indicating the shift position to be set next, for example, from second to third or from third to second. The shift change execution unit 34c changes shift position (shift up or shift down) in response to the shift change command. The auto shift change determination unit 34a performs the above processing when the storage device 31 holds the auto mode flag.

The processing by the auto shift change determination unit 34a is executed in the following manner, for example. That is, the storage device 31 has maps stored therein indicating the driving points (vehicle speed, positive amount of accelerator turn) at which the shift position is changed (hereinafter, "shift change maps"). The auto shift change determination unit 34a refers to the shift change maps and determines whether or not the vehicle speed and the amount of accelerator turn sensed through the sensors 41, 44 have reached the driving point, i.e., whether or not the time to change shift position has come. In the storage device 31, a map for shift down (hereinafter, "shift-down map") and a map for shift up (hereinafter, "shift-up map") are stored as the shift change maps. The shift-down map indicates the driving point at which the shift down is executed and the shift-up map indicates the driving point at which the shift up is executed.

The manual shift change determination unit 34b generates a shift change command indicating the next shift position according to the current shift position and the shift change request received through the shift switch 42 or the shift pedal 45. Further, the manual shift change determination unit 34b generates a shift change command according to the shift change request (shift-down request) received from the accelerator operation sensor 44 and the current shift position when the accelerator grip 24 turns in the negative direction. The time at which the accelerator grip 24 turns in the negative direction is when the amount of turn of the accelerator grip 24 in the negative direction reaches a negative threshold value, for example. Furthermore, in the embodiment in which the accelerator operation sensor 44 is a switch that turns on when the accelerator grip 24 reaches a negative predetermined turn position, the time at which the accelerator grip 24 turns in the negative direction is when an on-signal is input from the accelerator operation sensor 44.

Note that the manual shift change determination unit 34b may determine whether or not the shift change request received through the shift switch 42, the shift pedal 45, or the accelerator grip 24 is appropriate based on the driving state. Then, the manual shift change determination unit 34b may generate a shift change command according to the shift change request if the shift change request is recognized to be appropriate. For example, when the lower limit of the vehicle speed that allows shift up and the upper limit of the vehicle speed that allows shift down are set with respect to the respective shift positions in advance, the manual shift change determination unit 34b may generate a shift change command if the vehicle speed is within the upper limit and the lower limit.

When the shift change command is generated by the auto shift change determination unit 34a or the manual shift change determination unit 34b, the shift change execution unit 34c activates the clutch actuator 22 and the shift actuator 23 to operate the clutch 12 and the transmission gear of the transmission 13 in a predetermined procedure, and thereby, changes shift position in response to the shift change command. For example, the shift change execution unit 34c first sets the clutch 12 in the non-engagement state. Then, the shift change execution unit 34c changes the current shift position to the next shift position designated by the shift change command through moving the transmission gear and engagement of the transmission gear. Finally, the shift change execution unit 34c returns the clutch 12 into the engagement state and ends operation of changing shift position.

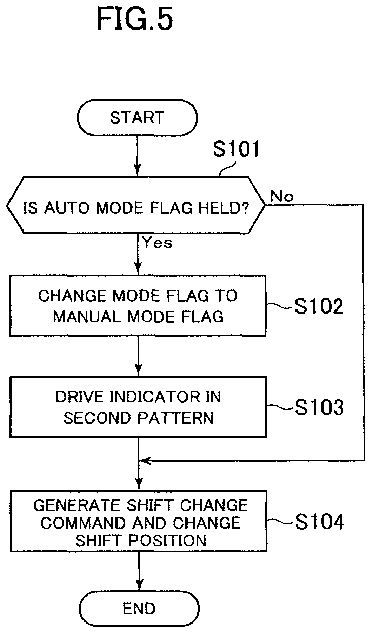

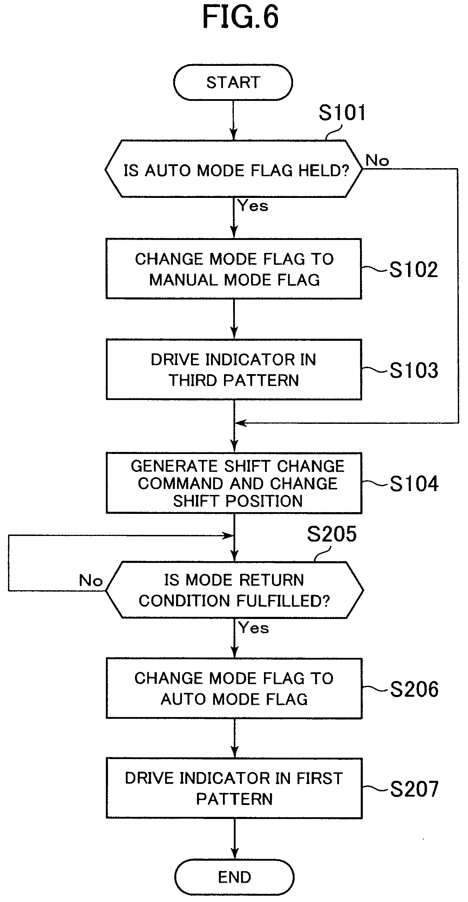

Examples of processing executed by the controller 30 will be explained. Figs. 5 and 6 are flowcharts showing flows of the examples of processing executed by the controller 30. Fig. 5 shows processing executed when the complete switching member is operated, and Fig. 6 shows processing executed when the temporal switching member is operated.

First, the case where the complete switching member is operated will be explained. When the complete switching member is operated and thus a shift change request is input to the controller 30, the mode selection unit 34d determines whether or not the mode flag held by the storage device 31 is the auto mode flag (S101). If the storage device 31 holds the auto mode flag, the mode selection unit 34d changes the mode flag held by the storage device 31 to the manual mode flag (S102). Further, the mode selection unit 34d drives the mode indicator 25 in the second pattern indicating the manual mode (S103). Then, the manual shift change determination unit 34b generates a shift change command in response to the shift change request input from the complete switching member, and the shift change execution unit 34c changes shift position in response to the shift change command (S104). At S101, if the storage device 31 does not hold the auto mode flag, i.e., holds the manual mode flag, the manual shift change determination unit 34b generates a shift change command in response to the shift change request input from the complete switching member, and the shift change execution unit 34c changes shift position in response to the shift change command (S104). This is the example of the processing executed when the complete switching member is operated.

Next, the case where the temporal switching member is operated will be explained. When the temporal switching member is operated and thus a shift change request is input to the controller 30, the mode selection unit 34d determines whether or not the mode flag held by the storage device 31 is the auto mode flag (S201). If the storage device 31 holds the auto mode flag, the mode selection unit 34d changes the mode flag held by the storage device 31 to the manual mode flag (S202). Further, the mode selection unit 34d drives the mode indicator 25 in the third pattern indicating the temporal switching in the manual mode (S203). Then, the manual shift change determination unit 34b generates a shift change command in response to the shift change request input from the temporal switching member, and the shift change execution unit 34c changes shift position in response to the shift change command (S204). Then, the mode selection unit 34d determines whether or not the mode return condition is fulfilled (S205). The mode selection unit 34d repeats the processing at S205 until the mode return condition is fulfilled. If the mode return condition is fulfilled, the mode selection unit 34d changes the mode flag held by the storage device 31 to the auto mode flag (S206). Further, the mode selection unit 34d drives the mode indicator 25 in the first pattern indicating that the auto mode is selected (S207). At S201, if the storage device 31 does not hold the auto mode flag, i.e., holds the manual mode flag, the manual shift change determination unit 34b generates a shift change command in response to the shift change request input from the temporal switching member, and the shift change execution unit 34c changes shift position in response to the shift change command (S204). This is the example of the processing executed when the temporal switching member is operated.

The invention is not limited to the motorcycle 1 that has been explained as above, various changes may be made thereto.

For example, the transmission 13 may be a continuously variable transmission, for example. In this case, the controller 30 may control the transmission ratio of the continuously variable transmission in a step-wise manner. For example, the controller may change the transmission ratio by a predetermined amount when the shift switch 42 is operated or the accelerator grip 24 is operated in the negative direction.

Further, the accelerator grip 24 may not necessarily turn in the negative direction from the neutral position. In this case, one of the shift switch 42 and the shift pedal 45 is assigned as the complete switching member and the other is set as the temporal switching member.

Furthermore, the motorcycle 1 does not necessarily have the shift pedal 45. In this case, one of the shift switch 42 and the accelerator grip 24 is assigned as the complete switching member and the other is assigned as the temporal switching member.

Moreover, the shift change operated member with which the temporal switching operation is performed and the shift change operated member with which the complete switching operation is performed may be the same. That is, two operation methods may be defined for the common shift change operated member, and one operation method may be defined as the temporal switching operation and the other operation method may be defined as the complete switching operation. For example, when the common shift change operated member is the shift switch 42, the operation of continuously pressing the shift switch 42 in a predetermined period may be defined as the complete switching operation, and the operation of pressing the shift switch 42 in a period shorter than the predetermined period may be defined as the temporal switching operation. Further, the operation of continuously pressing the shift switch 42 at a plurality of times may be defined as the complete switching operation, and the operation of pressing the shift switch 42 at the number of times less than that (e.g., once) may be defined as the temporal switching operation.

In addition, the motorcycle 1 includes the shift switch 42, the shift pedal 45, and the accelerator grip 24 as the shift change operated members. However, the motorcycle 1 may have another operated member than the shift change operated members as a shift change operated member. For example, one of two operation levers provided on the handle 5 may be used as the shift change operated member and the other may be used as a brake lever.

## Claims

1. A straddle-type vehicle (1) comprising:
a transmission (13);
an actuator (23) configured to actuate the transmission (13) to change shift positions;
a shift change request input part (7) operable by a rider; and
a controller (30) configured to control the shift positions of the transmission (13) by activating the actuator (23), wherein said controller (30) has an auto mode of controlling the transmission (13) to be set at a shift position according to an driving state of the vehicle (1) and a manual mode of controlling the transmission (13) in response to a shift change request received from the shift change request input part (7),
and **characterised in that**,
when a first operation for the shift change request input part (7) is performed in the auto mode, the controller (30) is configured to switch from the auto mode to the manual mode and change shift position in response to the first operation, and then, maintain the manual mode until a predetermined operation is performed by the rider, and
when a second operation for the shift change request input part (7) is performed in the auto mode, the controller (30) is configured to switch from the auto mode to the manual mode and change shift position in response to the second operation, and then, when a predetermined condition is fulfilled, return to the auto mode without an operation by the rider.

2. The straddle-type vehicle (1) according to claim 1, wherein the shift change request input part (7) includes a first shift change operated member and a second shift change operated member,
the first operation is for the first shift change operated member, and
the second operation is for the second shift change operated member.

3. The straddle-type vehicle (1) according to claim 2, wherein
the shift change request input part (7) includes at least two among a shift switch (42) for operation by a finger; a shift pedal (45) for operation by a foot; and an accelerator grip (24), where the accelerator grip (24) is rotatable from a neutral position in a positive direction and from the neutral position in a negative direction and outputs, as the shift change request, a rotational operation from the neutral position in the negative direction to the controller (30), and
the first shift change operated member is one of the at least two and the second shift change operated member is another of the at least two.

4. The straddle-type vehicle (1) according to claim 2 or 3, wherein each of the first shift change operated member and the second shift change operated member is a member for operation by hand.

5. The straddle-type vehicle (1) according to any one of claims 2 to 4, wherein the first shift change operated member is a member for receiving both a shift-up request and a shift-down request, and
the second shift change operated member is a member for receiving only the shift-down request of the shift-up request and the shift-down request.

## Patentansprüche

1. Grätschsitz-Fahrzeug (1) mit:
einem Getriebe (13);
einem Stellelement (23), das zum Betätigen des Getriebes (13) konfiguriert ist, um Schaltstellungen zu ändern;
einem durch den Fahrer bedienbares Eingabeteil zur Schaltwechselanforderung (7); und
einer Steuereinrichtung (30), die konfiguriert ist, um die Schaltstellungen des Getriebes (13) durch Betätigen des Stellelements (23) zu steuern, wobei die Steuereinrichtung (30) einen Automodus zum Steuern des Getriebes (13), so dass sie an einer Schaltstellung entsprechend einem Fahrzustand des Fahrzeugs (1) eingestellt ist, und einen Manualmodus zum Steuern des Getriebes (13) in Reaktion auf eine vom Eingabeteil zur Schaltwechselanforderung (7) empfangenen Schaltwechselanforderung besitzt,
**und dadurch gekennzeichnet, dass,**
wenn eine erste Betätigung für das Eingabeteil zur Schaltwechselanforderung (7) im Automodus durchgeführt wird, die Steuereinrichtung (30) konfiguriert ist, um vom Automodus in den Manualmodus umzuschalten und die Schaltposition in Reaktion auf die erste Betätigung zu ändern und dann den Manualmodus aufrechtzuerhalten, bis eine vorgegebene Betätigung durch den Fahrer durchgeführt wird, und
wenn eine zweite Betätigung für das Eingabeteil zur Schaltwechselanforderung (7) im Automodus durchgeführt wird, die Steuereinrichtung (30) konfiguriert ist, um vom Automodus in den Manualmodus umzuschalten und die Schaltposition in Reaktion auf die zweite Betätigung zu ändern und dann, wenn eine vorgegebene Bedingung erfüllt ist, in den Automodus ohne Betätigung durch den Fahrer zurückzukehren.

2. Grätschsitz-Fahrzeug (1) nach Anspruch 1, wobei das Eingabeteil zur Schaltwechselanforderung (7) ein erstes durch Schaltwechsel betätigtes Element und ein zweites durch Schaltwechsel betätigtes Element aufweist,
wobei die erste Betätigung für das erste durch Schaltwechsel betätigte Element und die zweite Betätigung für das zweite durch Schaltwechsel betätigte Element durchgeführt wird.

3. Grätschsitz-Fahrzeug (1) nach Anspruch 2, wobei
das Eingabeteil zur Schattwechsetanforderung (7) wenigstens zwei von einem Schalthebel (42) zur Betätigung mit einem Finger; einem Schaltpedal (45) zur Betätigung mit einem Fuß oder einem Beschleunigungsgriff (24) aufweist, wobei der Beschleunigungsgriff (24) von einer neutralen Position in eine positive Richtung und von der neutralen Position in eine negative Richtung drehbar ist und bei Schaltwechselanforderung einen Drehvorgang von der neutralen Position in die negative Richtung zur Steuereinrichtung (30) ausgibt, und
das erste durch Schaltwechsel betätigte Element das eine der wenigstens zwei und das zweite durch Schaltwechsel betätigte Element das andere ist.

4. Grätschsitz-Fahrzeug (1) nach Anspruch 2 oder 3, wobei das erste durch Schaltwechsel betätigte Element und das zweite durch Schaltwechsel betätigte Element jeweils ein für eine Betätigung per Hand vorgesehenes Element ist.

5. Grätschsitz-Fahrzeug (1) nach einem der Ansprüche 2 bis 4, wobei das erste durch Schaltwechsel betätigte Element ein Element zum Empfangen sowohl der Anforderung zum Hochschalten als auch der Anforderung zum Herunterschalten ist, und
das zweite durch Schaltwechsel betätigte Element ein Element zum Empfangen nur der Anforderung zum Herunterschalten von der Anforderung zum Hochschalten und der Anforderung zum Herunterschalten ist.

## Revendications

1. Véhicule de type à enfourcher (1) comprenant :
une transmission (13),
un actionneur (23) configuré pour actionner la transmission (13) pour changer de position de rapport de vitesse,
un composant de sélection de demande de changement de rapport (7) pouvant être mis en oeuvre par un motocycliste, et
un contrôleur (30) configuré pour commander les positions de rapport de vitesse de la transmission (13) en activant l'actionneur (23), ledit contrôleur (30) comportant un mode automatique de commande de la transmission (13) qui doit être placée à une position de rapport conforme à la conduite du véhicule (1), et un mode manuel de commande de la transmission (13) en réponse à une demande de changement de rapport reçue en provenance d'un composant de sélection de demande de changement de rapport (7),
et **caractérisé en ce que**
lorsqu'une première manoeuvre du composant de sélection de demande de changement de rapport (7) est effectuée en mode automatique, le contrôleur (30) est configuré pour opérer un basculement depuis le mode automatique vers le mode manuel et pour changer la position de rapport de vitesse en réponse à la première manoeuvre, puis pour conserver le mode manuel jusqu'à ce qu'une manoeuvre prédéterminée soit effectuée par le motocycliste, et
lorsqu'une seconde manoeuvre du composant de sélection de demande au changement de rapport (7) est effectuée dans le mode automatique, le contrôleur (30) est configuré pour opérer un basculement depuis le mode automatique vers le mode manuel et pour changer la position de rapport en réponse à la seconde manoeuvre, puis, lorsqu'une condition prédéterminée est remplie, pour revenir au mode automatique sans manoeuvre du motocycliste.

2. Véhicule de type à enfourcher (1) selon la revendication 1, dans lequel le composant de sélection de demande de changement de rapport (7) inclut un premier élément manoeuvré pour le changement de rapport et un second élément manoeuvré pour le changement de rapport,
la première manoeuvre est destinée au premier élément manoeuvré pour le changement de rapport, et
la seconde manoeuvre est destinée au second élément manoeuvré pour le changement de rapport.

3. Véhicule de type à enfourcher (1) selon la revendication 2, dans lequel
la composant de sélection de demande de changement de rapport (7) inclut au moins deux éléments parmi un commutateur de changement de rapport (42) destiné à être actionné par un doigt, une pédale de changement de rapport (45) destinée à être actionnée par un pied et une poignée d'accélérateur (24), la poignée d'accélérateur (24) pouvant tourner depuis une position neutre dans une direction positive et depuis la position neutre dans une direction négative, et elle délivre en sortie au contrôleur (30), comme demande de changement de rapport, une manoeuvre de rotation depuis la position neutre dans la direction négative, et
le premier élément manoeuvré pour le changement de rapport est l'un parmi au moins deux éléments et le second élément manoeuvré pour le changement de rapport et un autre des deux éléments ou plus.

4. Véhicule de type à enfourcher (1) selon la revendication 2 ou la revendication 3, dans lequel chacun du premier élément manoeuvré pour le changement de rapport et du second élément manoeuvré pour le changement de rapport est un composant actionné à la main.

5. Véhicule de type à enfourcher (1) selon l'une quelconque des revendications 2 à 4, dans lequel le premier élément manoeuvré pour le changement de rapport est un composant destiné à recevoir à la fois une demande de montée de rapport et une demande de descente de rapport, et
le second élément manoeuvré pour le changement de rapport est un composant destiné à ne recevoir que la demande de descente de rapport parmi la demande de montée de rapport et la demande de descente de rapport.
